# EUROPEAN PATENT APPLICATION

(11) **EP 3 273 337 A1**
(43) Date of publication of application: **24.01.2018**
(21) Application number: 15891669.2
(22) Date of filing: 28.10.2015
(51) Int. Cl.: G06F 3/0488

(54) **METHOD AND SYSTEM APPLIED TO TOUCHSCREEN FOR NEWLY CREATING AND DISMISSING FOLDER**

(30) Priority: 08.05.2015 CN 201510231090
(71) Applicant: Shanghai Feixun Communication Co., Ltd., Shanghai 201616 (CN)
(72) Inventor: QIU, Yun, Shanghai 201616 (CN)
(74) Representative: Sun, Yiming
(86) International application number: PCT/CN2015/093043
(87) International publication number: WO 2016/179970

(57) **Abstract**

This document publishes a method and a system of creating or cancelling folder applied on touch screen. In one embodiment, the method includes the following steps: establishing a preset input information table, the preset input information table includes preset input information and corresponding acquiring rules;; monitoring whether input information exists in the preset area in a main interface; identifying whether the input information is in the preset input information; obtaining corresponding files/applications according to the input information and the corresponding acquiring rules in the preset input information table in the main interface; creating a new folder in the main interface, and removing all obtained files or application icons into the new folder.. According to this method and apparatus, the users can create or cancel the folder quickly and remove the files into the folder or the main interface following default rules.

## Description

### TECHNICAL FIELD

The present invention relates to the field of file management technology, and more particularly to a folder creating and cancelling method and system applied on touch screen.

### BACKGROUND

The input technology of touch screen increases the user operation experience. The user may perform the input operation on the touch screen without any keyboards or external devices and manage the files on the terminal interface by dragging.

But in everyday use, the users often encounter the situation: since many files/application icons are on the main interface, so it costs a long time and effort to find a specific file. Although the general touch screen device includes the function of creating new folder on the main interface, but the users need to classify the files by themselves and drag the file or the icon into the folder one by one, which is tedious and time-consuming.

Conversely, if some users want to remove the file or the icon in the folder into the main interface, they need to remove the file or the icon out of the folder one by one, which is tedious and time-consuming.

However, no method is available to help the user create folder and remove the files to the created folder quickly according to the preset rules so far. And no method is available to find the file or the icon in the folder and cancel the folder quickly.

### SUMMARY

This disclosure provides a folder creating and cancelling method applied on touch screen, a method to help the user create folder and remove the files to the created folder quickly according to the preset rules and a method to cancel the file or the icon in the folder quickly.

In one embodiment, a folder creating method applied on touch screen, including:
Step1, establishing a preset input information table, the preset input information table includes preset input information and corresponding acquiring rules;
Step2, monitoring whether input information exists in the default area in a main interface;
if so, performing Step3, identifying whether the input information is in the preset input information;
if so, performing Step4, obtaining corresponding files/applications according to the input information and the corresponding acquiring rules in the preset input information table in the main interface;
Step5, creating a new folder in the main interface, and removing all obtained files or application icons into the new folder.

Wherein, the preset input information includes letters or characters.

Wherein, the acquiring rules include: obtaining the name of file or application containing the input information either in the initial alphabet, or character, or the initial Pinyin letter.

Wherein, between step4 and setp5, the method further includes:
Step A, providing a prompt window; the prompt window comprises a name, a confirmation instruction and a cancellation instruction of corresponding files/applications obtained according to the input information and the corresponding acquiring rules in the preset input information table;
Step B, monitoring instruction information; if the instruction information is the confirmation instruction, performing step5; if the instruction information is the cancellation instruction, performing step2.

In another embodiment, a folder creating system applied on touch screen, including: A storing module, configured to establish a preset input information table, the preset input information table comprises preset input information and corresponding acquiring rules;

A monitoring module, configured to monitor whether input information exists in the default area in a main interface;

A processing module, electrically connected with the storing module and the monitoring module, configured to call the preset input information table in the storing module and identify whether the input information exists in the preset input information when the input information is monitored in the default area of the main interface by the monitoring module;

An obtaining module, electrically connected with the processing module and the storing module, configured to obtain corresponding files/icons according to the input information and the corresponding acquiring rules in the preset input information table in the main interface;

The processing module is further configured to create a new folder in the main interface and remove all obtained files or application icons into the new folder.

Wherein, the preset input information includes letters or characters.

Wherein, the acquiring rules include:
obtaining the name of file or application containing the input information either in the initial alphabet, or character, or the initial Pinyin letter.

Wherein, the system further includes:
A prompting module, electrically connected with the processing module, configured to provide a prompt window; the prompt window includes a name, a confirmation instruction and a cancellation of corresponding files/applications obtained according to the input information and the corresponding acquiring rules in the preset input information table;

The monitoring module is further electrically connected with the prompting module, configured to monitor instruction information; if the instruction information is the confirmation instruction, the monitoring module is configured to send the instruction to the processing module and command the processing module to create a new folder in the main interface and remove all files/application icons into the new folder; if the instruction information is the cancellation instruction, the monitoring module is configured to monitor whether input information exists in the default area in the main interface.

In another embodiment, a folder cancelling method applied on touch screen, including:
Step 1, establishing a preset input information table, the preset input information table includes preset input information and corresponding acquiring rules;
Step 2, monitoring whether input information exists in the default area of a folder; if so, performing step3;
Step 3, identifying whether the input information is in the preset input information; if so, performing step4;
Step 4, obtaining corresponding files/applications according to the input information and the corresponding acquiring rules in the preset input information table in the folder;
Step 5, cancelling the folder, and removing all the files/application icons into the main interface.

Wherein, the preset input information includes letters or characters.

Wherein, the acquiring rules include: obtaining the name of files or application containing the input information either in the initial alphabet, or character, or the initial Pinyin letter.

Preferably, wherein between step 4 and setp5, the method further includes:
Step A, providing a prompt window; the prompt window includes a name, a confirmation instruction and a cancellation instruction of corresponding files/applications obtained according to the input information and the corresponding acquiring rules in the preset input information table;
Step B, monitoring instruction information; if the instruction information is the confirmation instruction, performing step5; if the instruction information is the cancellation instruction, performing step2.

In another embodiment, a folder cancelling system applied on touch screen, the system including:
A storing module, configured establish a preset input information table, the preset input information table comprises preset input information and corresponding acquiring rules;
A monitoring module, configured to monitor whether input information exists in the default area of a folder;
A processing module, electrically connected with the storing module and the monitoring module, configured to call the preset input information table in the storing module and identify whether the input information exists in the preset input information when the input information is monitored in the default area of the folder by the monitoring module;
An obtaining module, electrically connected with the processing module and the storing module, configured to obtain corresponding files/icons according to the input information and the corresponding acquiring rules in the preset input information table in the folder;
The processing module is further configured to remove all obtained files or application icons into the main interface.

Wherein, the preset input information includes letters or characters.

Wherein, the acquiring rules includes:
obtaining the name of files or application containing the input information either in the initial alphabet, or character, or the initial Pinyin letter.

Wherein, the system includes:
A prompting module, electrically connected with the processing module, configured to provide a prompt window; the prompt window comprises a name, a confirmation instruction and a cancellation of corresponding files/applications obtained according to the input information and the corresponding acquiring rules in the preset input information table;

The monitoring module is further electrically connected with the prompting module, configured to monitor instruction information; if the instruction information is the confirmation instruction, the monitoring module is configured to send the instruction to the processing module, and command the processing module to cancel the folder and remove all the files/application icons into the main interface; if the instruction information is the cancellation instruction, the monitoring module is configured to monitor whether input information exists in the default area in the folder.

As described above, this disclosure provides a folder creating and cancelling method and system applied on touch screen, which has the following benefits:
1. By means of obtaining the input information in the default area of the main interface, obtaining the files or application icons to be relocated into a folder according to the preset information table and the acquiring rules, and removing all files or application icons into a new created folder, which solves the problem that the users must remove the files and application icons into a new folder one by one and saves operation time to improve the user experience.
2. By means of obtaining the input information in the default area of the folder, obtaining the files or application icons to be dismissed to the main interface according to the preset information table and the acquiring rules, and dismissing the files or application icons to the main interface, which solves the problem that the users must remove the dismissed files or application icons to the main interface one by one and saves operation time to improve the user experience.

### BRIEF DESCRIPTION OF THE DRAWINGS

To illustrate the technical solution according to embodiments of the present invention more clearly, drawings to be used in the description of the embodiments are described in brief as follows. However, the drawings described herein are for illustrative purposes only of selected embodiments and not all possible implementations, and are not intended to limit the scope of the present disclosure. Corresponding reference numerals indicate corresponding parts throughout the several views of the drawings.
FIG. 1 is a flow chart of a method of creating folder applied on touch screen according to an embodiment.
FIG. 2 is an operating schematic view illustrating a method of creating folder applied on touch screen according to an embodiment.
FIG. 3 is another operating schematic view illustrating a method of creating folder applied on touch screen according to an embodiment.
FIG. 4 is a block diagram of a system of creating folder applied on touch screen according to an embodiment.
FIG. 5 is a flow chart of a method of cancelling folder applied on touch screen according to an embodiment.
FIG. 6 is an operating schematic view illustrating a method of a method of cancelling folder applied on touch screen according to an embodiment.
FIG. 7 is another operating schematic view illustrating a method of cancelling folder applied on touch screen according to an embodiment.
FIG. 8 is a block diagram of a system of cancelling folder applied on touch screen according to an embodiment.

### DETAILED DESCRIPTION

Reference will now be made in detail to embodiments, examples of which are illustrated in the accompanying drawings. In the following detailed description, numerous specific details are set forth in order to provide a thorough understanding of the present invention. However, it will be apparent to one of ordinary skill in the art that the present invention may be practiced without these specific details. In other instances, well-known methods, procedures, components, and circuits have not been described in detail so as not to unnecessarily obscure aspects of the embodiments.

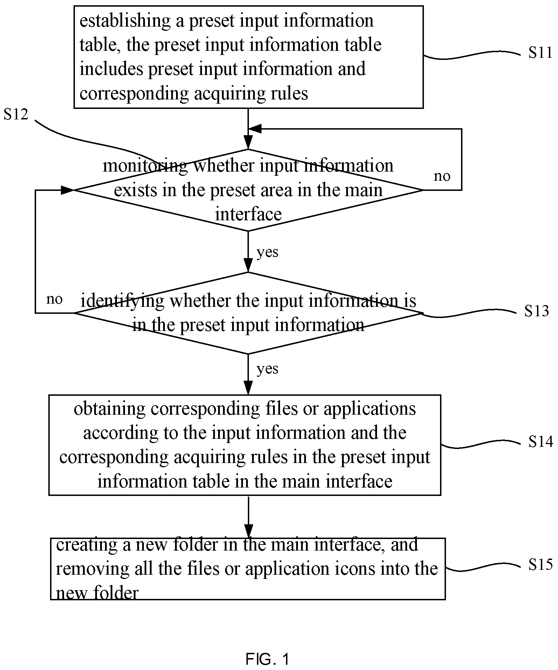

FIG. 1 illustrates a flow chart of a method of creating a folder applied on touch screen with a first embodiment. Referring to FIG. 1, the method includes the following steps:
Step 11, establishing a preset input information table, the preset input information table includes preset input information and corresponding acquiring rules.

The preset input information includes letters or characters. The letters or characters can be of any country.

The acquiring rules include: obtaining the name of file or application containing the input information either in the initial alphabet, or character, or the initial Pinyin letter.
Step 12, monitoring whether input information exists in the preset area in the main interface.

The preset area can be defined by users. The preset area can be blank area of the main interface or a specific position of a preset area.

If input information exists in the preset area in the main interface, performing Step 13.

Step 13, identifying whether the input information is in the preset input information. If so, performing Step 14.

Step 14, obtaining corresponding files/applications according to the input information and the corresponding acquiring rules in the preset input information table in the main interface.

Step 15, creating a new folder in the main interface, and removing all the files or application icons into the new folder.

This method can be used in mobile, tablet or any computer with a touch screen.

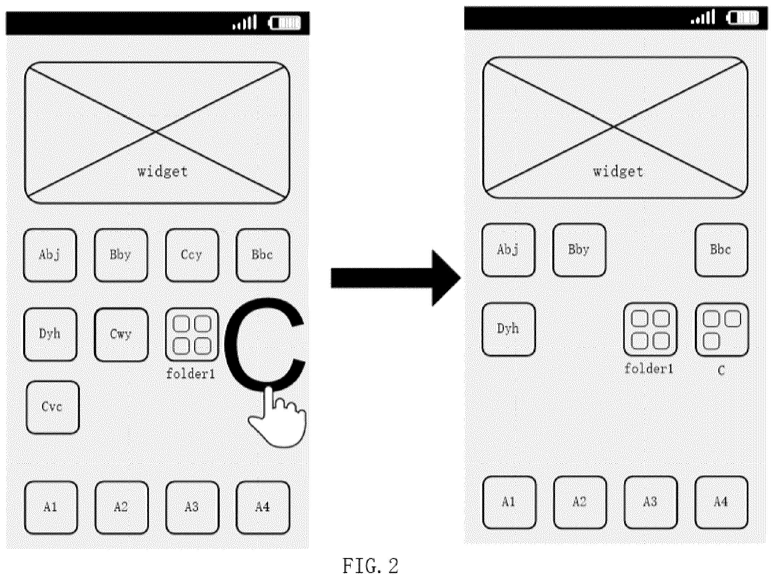

FIG. 2 is an operating schematic view illustrating a method of creating folder applied on touch screen according to a first embodiment. Referring to FIG. 2, the method of the first embodiment is used in mobile with a touch screen. In FIG. 2, user inputs information in the preset area, the preset area is defined as the blank area of the main interface. The user input information is C. When the input information is monitored in the blank area of the main interface and the preset input information includes the user input information C, acquire the corresponding files or application icons according to the input information and the acquiring rules corresponding to the preset input information table in the main interface. In one embodiment, the acquiring rules include obtaining the name of file or application containing the input information either in the initial alphabet, or character, or the initial Pinyin letter. As shown in FIG. 2, acquiring the application icons with letter C in initial place of the name, such as Ccy, Cwy, and Cvc. And removing these icons into a new folder. In the FIG. 2, when the folder is created, the folder is named with the input information.

In one embodiment, wherein the acquiring rules include: obtaining the name of file or application containing the input information either in the initial alphabet, or character, or the initial Pinyin letter. Wherein the acquiring rules include: obtaining the letter by case sensitive, for example, if the input letter is D, only the files or application icons whose name with the letter D in the initial place can be obtained; or obtaining the letter by non-case sensitive, for example, if the input letter is D, the files or application icons whose name with the letter D or d in the initial place can be obtained. It can acquire the files or application icons by distinguishing Traditional Chinese and Simplified Chinese or not. It can acquire the files or application icons by the initial letter of the word. For example, when the input information is letter D or d, the files or application icons named as 'Dongjinglvyougonglue' whose initial Pinyin letter including letter D will be obtained.

The method of creating folder applied on touch screen provides a second embodiment, wherein between the step4 and the setp5, the method in the second embodiment further includes:
Step A, providing a prompt window; the prompt window includes a name, a confirmation instruction and a cancellation of corresponding files/applications obtained according to the input information and the corresponding acquiring rules in the preset input information table;
Step B, monitoring instruction information; if the instruction information is the confirmation instruction, performing step 15; if the instruction information is the cancellation instruction, performing step 12.

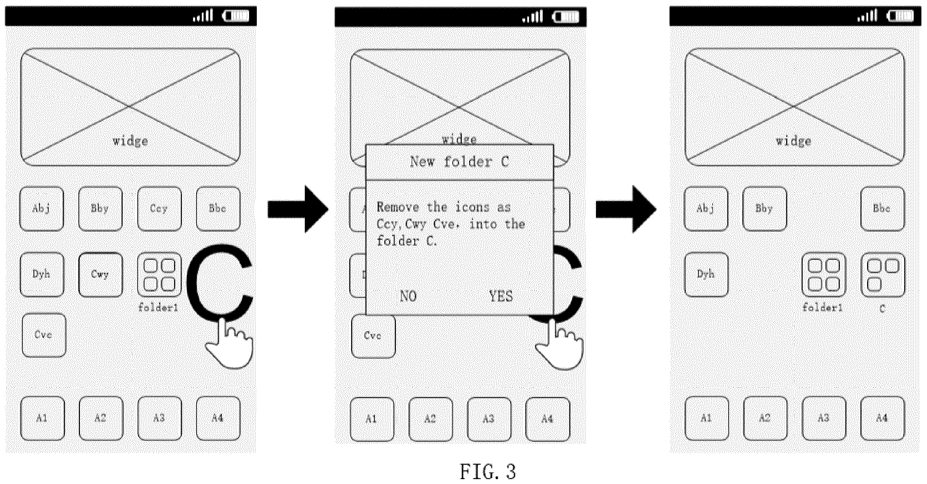

Referring to FIG. 3, when the user inputs information C, a prompt window will be provided. The prompt window includes name of corresponding files/applications obtained according to the input information and the corresponding acquiring rules in the preset input information table, which is Ccy, Cwy and Cve, and buttons for confirming and cancelling the instruction.

When the confirmation instruction is monitored, the application icons whose name is initial with letter C, such as Ccy, Cwy and Cvc, are obtained and are removed into a new created folder. Referring to FIG. 3, when creating a new folder, the folder is named with the input information.

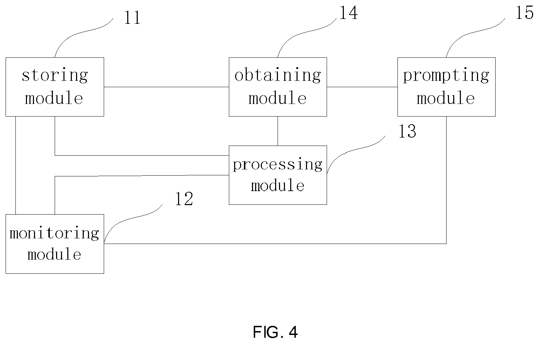

FIG. 4 is a block diagram of a system of creating folder applied on touch screen according to an embodiment. The system includes a storing module 11, a monitoring module 12, a processing module 13, an obtaining module 14 and a prompting module 15.

The storing module 11, configured to establish a preset input information table, the preset input information table comprises preset input information and corresponding acquiring rules. The monitoring module 12, configured to monitor whether input information exists in the preset area of a folder.

The processing module 13, electrically connected with the storing module 11 and the monitoring module 12, configured to call the preset input information table in the storing module and identify whether the input information exists in the preset input information when the input information is monitored in the preset area of the folder by the monitoring module.

The obtaining module 14, electrically connected with the processing module and the storing module, configured to obtain corresponding files/icons according to the input information and the corresponding acquiring rules in the preset input information table in the folder.

The processing module 13 is further configured to remove all obtained files or application icons into the main interface.

Wherein, the preset input information includes letters or characters.

Wherein, the acquiring rules include: obtaining the name of file or application containing the input information either in the initial alphabet, or character, or the initial Pinyin letter.

Wherein, the system further includes a prompting module 15.

The prompting module 15, electrically connected with the processing module, configured to provide a prompt window; the prompt window includes a name, a confirmation instruction and a cancellation of corresponding files/applications obtained according to the input information and the corresponding acquiring rules in the preset input information table.

The monitoring module 12 is further electrically connected with the prompting module 15, configured to monitor instruction information; if the instruction information is the confirmation instruction, the monitoring module 12 is configured to send the instruction to the processing module 13, and command the processing module 13 to create a new folder in the main interface and remove all the files or application icons into the new folder; if the instruction information is the cancellation instruction, the monitoring module is configured to monitor whether input information exists in the preset area of the main interface.

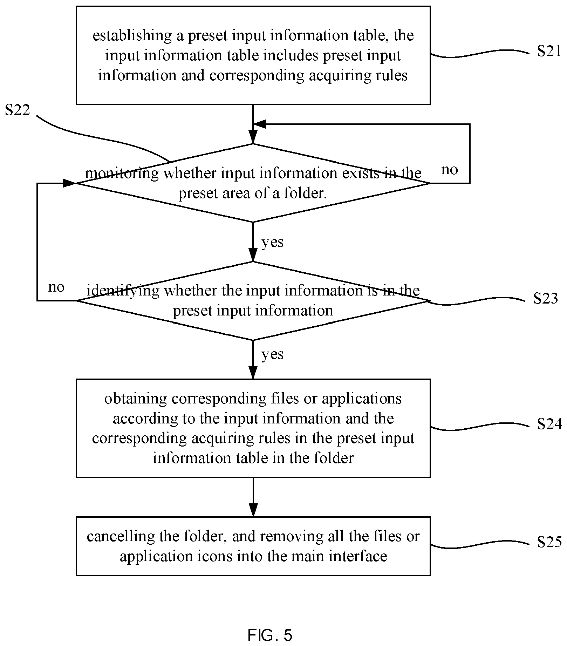

FIG. 5 is a flow chart of a method of cancelling folder applied on touch screen according to an embodiment. Referring to FIG. 5, the method including:
Step 21, establishing a preset input information table, the input information table includes preset input information and corresponding acquiring rules.

The preset input information includes letters or characters. The letters or characters can be of any country.

The acquiring rules include: obtaining the name of file or application containing the input information either in the initial alphabet, or character, or the initial Pinyin letter.

Step 22, monitoring whether input information exists in the preset area of a folder.

The preset area can be defined by users. The preset area can be blank area of the main interface or a specific position of a preset area.

If input information exists in the preset area of the folder, step23 is performed;

Step 23, identifying whether the input information is in the preset input information.

If the input information is in the preset input information, step24 is performed.

Step 24, obtaining corresponding files/applications according to the input information and the corresponding acquiring rules in the preset input information table in the folder.

Step 25, cancelling the folder, and removing all the files or application icons into the main interface.

This method can be used in mobile or tablet. This method can also be used in any computer with a touch screen.

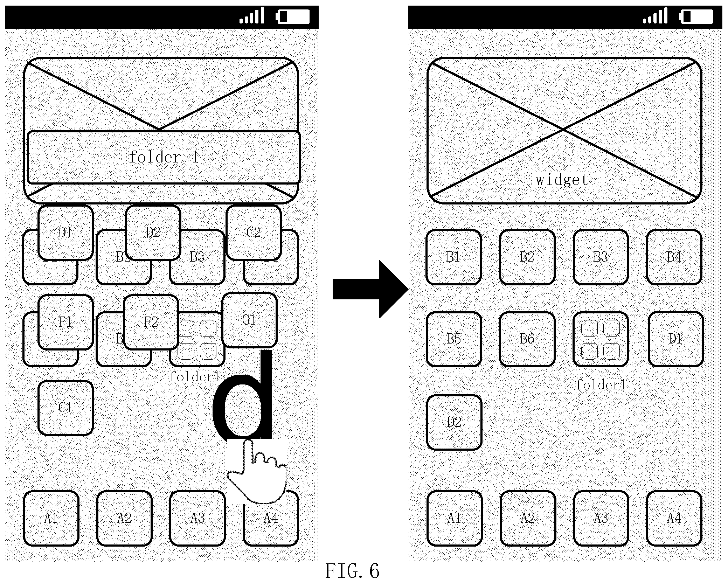

FIG. 6 is an operating schematic view illustrating a method of cancelling folder applied on touch screen according to a first embodiment. Referring to FIG. 6, the method of the first embodiment is used in mobile with a touch screen. Information is input in the preset area. In the FIG. 6, the preset area is defined as the blank area of the folder. The user input information is d. When input information is monitored in the blank area of the folder and the preset input information includes the input information d, acquiring the corresponding files or application icons according to the input information and the acquiring rules that are corresponding to the preset input information table in the folder. In one embodiment, the acquiring rules include obtaining the name of file or application containing the input information either in the initial alphabet, or character, or the initial Pinyin letter. Referring to FIG. 6, D1 and D2 with the initial alphabet d are obtained and removed into the main interface.

In one embodiment, wherein the acquiring rules include: obtaining the file or application whose name containing the input information either in the initial alphabet, or character, or the initial Pinyin letter. Wherein the acquiring rules include: obtaining the letter by case sensitive, for example if the input letter is D, only the files or application icons whose name with the letter D in the initial place can be obtained. or obtaining the letter by non-case sensitive, for example, if the input letter is D, the files or application icons whose name with the letter D or d in the initial place can be obtained. It can acquire the files or application icons by distinguishing Traditional Chinese and Simplified Chinese or not. It can acquire the files or application icons by the initial letter of the word. For example, when the input information is letter D or d, the files or application icons named as 'Dongjinglvyougonglue' whose initial Pinyin letter including letter D will be obtained.

The method of cancelling folder applied on touch screen provides a second embodiment. wherein between step 24 and step 25, the method in the second embodiment further includes:
Step A1, providing a prompt window; the prompt window includes a name, a confirmation instruction and a cancelled instruction; The name, the deterministic instruction and the cancelled instruction of corresponding files/applications obtained according to the input information and the corresponding acquiring rules in the preset input information table;
Step B1, monitoring instruction information; if the instruction information is the confirmation instruction, performing step 25; if the instruction information is the cancelled instruction, performing step 22.

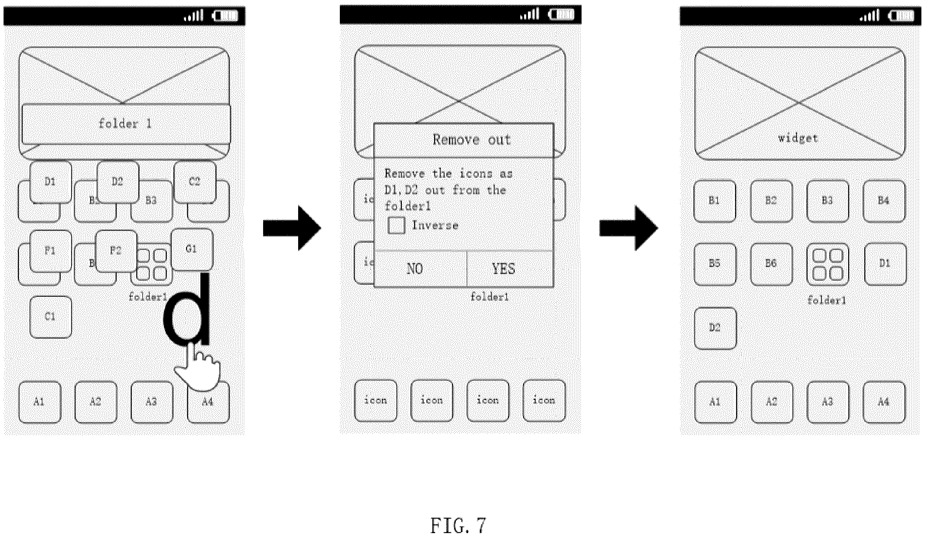

Referring to FIG. 7, when the user inputs information d, a prompt window will be provided. The prompt window includes a name, a confirmation instruction and a cancellation instruction. The name, the confirmation instruction and the cancellation instruction are acquired from files or application icons that are acquired according to the input information and the acquiring rules in the preset input information table which are D1, D2, and buttons for confirming and cancelling instructions.

When the confirmation instruction is monitored, the applications whose initial letter of name is D are obtained removed into the main interface.

The second embodiment improves the user experience by providing a prompt window.

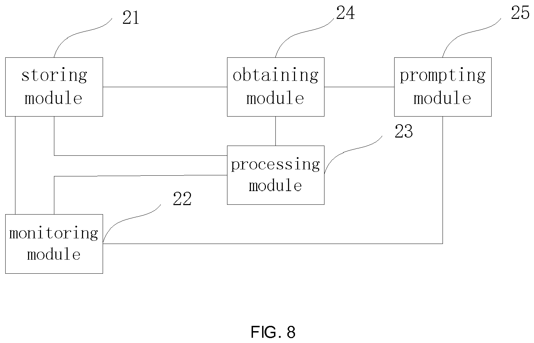

FIG. 8 is a block diagram of a system of cancelling folder applied on touch screen according to an embodiment. The system includes a storing module 21, a monitoring module 22, a processing module 23, an obtaining module 24 and a prompting module 25.

The storing module 21, configured to establish a preset input information table, the preset input information table includes preset input information and corresponding acquiring rules

The monitoring module 22, configured to monitor whether input information exists in the default area in a main interface.

The processing module 23, electrically connected with the storing module 21 and the monitoring module 22, configured to call the preset input information table in the storing module and identify whether the input information exists in the preset input information when the input information is monitored in the default area of the folder by the monitoring module.

The obtaining module 24, electrically connected with the processing module 23 and the storing module 21, configured to obtain corresponding files/icons according to the input information and the corresponding acquiring rules in the preset input information table in the folder.

The processing module 23 is further configured to remove all obtained files or application icons into the main interface.

Wherein, the preset input information includes letters or characters.

Wherein, the acquiring rules include: obtaining the name of file or application containing the input information either in the initial alphabet, or character, or the initial Pinyin letter.

Wherein, the system further includes a prompting module 25. The prompting module 25 electrically connected with the processing module 24, configured to provide a prompt window; the prompt window includes a name, a confirmation instruction and a cancellation instruction of corresponding files/applications obtained according to the input information and the corresponding acquiring rules in the preset input information table.

The monitoring module 22 is also electrically connected with the prompting module 25, configured to monitor instruction information; if the instruction information is the confirmation instruction, the monitoring module 22 is configured to send the instruction to the processing module 23, and command the processing module 23 to cancel the folder and remove all the files or application icons into the main interface; if the instruction information is the cancellation instruction, the monitoring module 22 is configured to monitor whether input information exists in the default area in the folder.

According to above embodiments, this document publishes a method and a system of creating or cancelling folder applied on touch screen, which has the following benefits:
1. By means of obtaining the input information in the default area of the main interface, obtaining the files or application icons to be relocated into a folder according to the preset information table and the acquiring rules, and removing all files or application icons into a new created folder, which solves the problem that the users must remove the files and application icons into a new folder one by one and saves operation time to improve the user experience.
2. By means of obtaining the input information in the default area of the folder, obtaining the files or application icons to be dismissed to the main interface according to the preset information table and the acquiring rules, and dismissing the files or application icons to the main interface, which solves the problem that the users must remove the dismissed files or application icons to the main interface one by one and saves operation time to improve the user experience.

The contents described above are only preferred embodiments of the present invention, but the scope of the present invention is not limited to the embodiments. Any ordinarily skilled in the art would make any modifications or replacements to the embodiments in the scope of the present invention, and these modifications or replacements should be included in the scope of the present invention. Thus, the scope of the present invention should be subjected to the claims.

## Claims

1. Afolder creating method applied on a touch screen, comprising:
Step 1, establishing a preset input information table, wherein the preset input information table comprises preset input information and corresponding acquiring rules;
Step 2, monitoring whether input information exists in the preset area in a main interface;
Step 3, identifying whether the input information is in the preset input information if the input information exists in the preset area in the main interface;
Step 4, obtaining corresponding files or applications according to the input information and the corresponding acquiring rules in the preset input information table in the main interface, if the input information is in the preset input information;
Step 5, creating a new folder in the main interface, and moving all obtained files or application icons into the new folder.

2. The folder creating method applied on a touch screen according to claim 1, wherein the preset input information comprises letters or characters.

3. The folder creating method applied on a touch screen according to claim 2, wherein the acquiring rules comprise:
obtaining the name of files or applications containing the input information in an initial alphabet, a character, or an initial Pinyin letter.

4. The folder creating method applied on a touch screen according to claim 1, wherein between Step 4 and Step 5, further comprising:
Step A, providing a prompt window; wherein the prompt window comprises a name, a confirmation instruction and a cancellation instruction of corresponding files or applications obtained according to the input information and the corresponding acquiring rules in the preset input information table; and
Step B, monitoring instruction information; if the instruction information is the confirmation instruction, performing Step 5; or if the instruction information is the cancellation instruction, performing Step 2.

5. A folder creating system applied on a touch screen, comprising:
a storing module, configured to establish a preset input information table, wherein the preset input information table comprises preset input information and corresponding acquiring rules;
a monitoring module, configured to monitor whether input information exists in the preset area in a main interface;
a processing module, electrically connected with the storing module and the monitoring module, configured to call the preset input information table in the storing module and identify whether the input information exists in the preset input information when the input information is monitored in the preset area of the main interface by the monitoring module;
an obtaining module, electrically connected with the processing module and the storing module, configured to obtain corresponding files or applications according to the input information and the corresponding acquiring rules in the preset input information table in the main interface;
wherein, the processing module is further configured to create a new folder in the main interface and remove all obtained files or applications into the new folder.

6. The folder creating system applied on a touch screen according to claim 5, wherein the preset input information comprises letters or characters.

7. The folder creating system applied on a touch screen according to claim 6, wherein the acquiring rules comprise:
obtaining the name of files or applications containing the input information in an initial alphabet, a character, or an initial Pinyin letter.

8. The folder creating system applied on a touch screen according to claim 5, wherein the system further comprises:
a prompting module, electrically connected with the processing module, configured to provide a prompt window; wherein the prompt window comprises a name, a confirmation instruction and a cancellation instruction of corresponding files or applications obtained according to the input information and the corresponding acquiring rules in the preset input information table;
the monitoring module, electrically connected with the prompting module, configured to monitor instruction information; if the instruction information is the confirmation instruction, the monitoring module is configured to send the instruction to the processing module and command the processing module to create a new folder in the main interface and remove all files or application icons into the new folder; or if the instruction information is the cancellation instruction, the monitoring module is configured to monitor whether input information exists in the preset area in the main interface.

9. A folder cancelling method applied on a touch screen, comprising:
Step 1, establishing a preset input information table, wherein the preset input information table comprises preset input information and corresponding acquiring rules;
Step 2, monitoring whether input information exists in the preset area of a folder;
Step 3, identifying whether the input information is in the preset input information, if the input information exists in the preset area of the folder;
Step 4, obtaining corresponding files or applications according to the input information and the corresponding acquiring rules in the preset input information table in the folder, if the input information is in the preset input information;
Step 5, cancelling the folder, and removing all the files or application icons into the main interface.

10. The folder cancelling method applied on a touch screen according to claim 9, wherein the preset input information comprises letters or characters.

11. The folder cancelling method applied on a touch screen according to claim 10, wherein the acquiring rules comprise:
obtaining the name of files or applications containing the input information in an initial alphabet, a character, or an initial Pinyin letter.

12. The folder cancelling method applied on a touch screen according to claim 9, wherein between Step 4 and Step 5, further comprises:
Step A, providing a prompt window; wherein the prompt window comprises a name, a confirmation instruction and a cancellation instruction of corresponding files or applications obtained according to the input information and the corresponding acquiring rules in the preset input information table;
Step B, monitoring instruction information; if the instruction information is the confirmation instruction, performing Step 5; if the instruction information is the cancellation instruction, performing Step 2.

13. A folder cancelling system applied on a touch screen, comprising:
a storing module, configured to establish a preset input information table, wherein the preset input information table comprises preset input information and corresponding acquiring rules;
a monitoring module, configured to monitor whether input information exists in the preset area of a folder;
a processing module, electrically connected with the storing module and the monitoring module, configured to call the preset input information table in the storing module and identify whether the input information exists in the preset input information when the input information is monitored in the preset area of the folder by the monitoring module;
an obtaining module, electrically connected with the processing module and the storing module, configured to obtain corresponding files or icons according to the input information and the corresponding acquiring rules in the preset input information table in the folder;
wherein, the processing module is further configured to remove all obtained files/application icons into the main interface.

14. The folder cancelling system applied on a touch screen according to claim 13, wherein the preset input information comprises letters or characters.

15. The folder cancelling system applied on a touch screen according to claim 14, wherein the acquiring rules comprise:
obtaining the name of file or application containing the input information either in an initial alphabet, a character, or an initial Pinyin letter.

16. The folder cancelling system applied on a touch screen according to claim 13, wherein the system further comprises:
a prompting module, electrically connected with the processing module, configured to provide a prompt window; wherein the prompt window comprises a name, a confirmation instruction and a cancellation of corresponding files or applications obtained according to the input information and the corresponding acquiring rules in the preset input information table;
the monitoring module, electrically connected with the prompting module, configured to monitor instruction information; if the instruction information is the confirmation instruction, the monitoring module is configured to send the instruction to the processing module, and command the processing module to cancel the folder and remove all the files or application icons into the main interface; or, if the instruction information is the cancellation instruction, the monitoring module is configured to monitor whether input information exists in the preset area in the folder.
